# EUROPÄISCHE PATENTSCHRIFT

(11) **EP 2 919 081 B1**
(45) Veröffentlichungstag und Bekanntmachung des Hinweises auf die Patenterteilung: **28.12.2016**
(21) Anmeldenummer: 14159692.4
(22) Anmeldetag: 14.03.2014
(51) Int. Cl.: G05B 19/4061

(54) **Bearbeitungsmaschine mit Berücksichtigung von Lagefehlern bei Kollisionsprüfung**
Processing machine taking into account position errors in collision checking
Machine d'usinage avec prise en compte des erreurs de position lors du contrôle de collision

(43) Veröffentlichungstag der Anmeldung: 16.09.2015
(73) Patentinhaber: Siemens Aktiengesellschaft, 80333 München (DE)
(72) Erfinder: Bretschneider, Jochen, 73732 Esslingen (DE)

(56) Entgegenhaltungen:
- EP-A2- 1 531 374
- DE-A1- 10 321 241
- US-A- 5 105 368

## Beschreibung

Die vorliegende Erfindung betrifft ein Betriebsverfahren für eine Bearbeitungsmaschine, insbesondere eine Werkzeugmaschine,
- wobei einer numerischen Steuerung der Bearbeitungsmaschine ein Teileprogramm vorgegeben ist, das eine Sequenz von Lagesollwerten für ein Werkzeug der Bearbeitungsmaschine relativ zu einem mittels des Werkzeugs zu bearbeitenden Werkstück aufweist,
- wobei die numerische Steuerung anhand der Lagesollwerte für eine Mehrzahl von auf Maschinenelemente der Bearbeitungsmaschine wirkenden lagegeregelten Achsen der Bearbeitungsmaschine jeweils einen Achssollwert ermittelt,
- wobei den Maschinenelementen, dem Werkstück und dem Werkzeug innerhalb der numerischen Steuerung virtuelle Schutzkörper zugeordnet sind,
- wobei die numerische Steuerung vor dem Ansteuern der lagegeregelten Achsen Volumina ermittelt, die von den Schutzkörpern bei Ansteuerung der lagegeregelten Achsen gemäß der Sequenz von Lagesollwerten eingenommen würden, und prüft, ob - soweit erforderlich, mit Ausnahme der durch das Werkzeug am Werkstück vorzunehmenden Bearbeitung - die Schutzkörper hierbei disjunkt voneinander bleiben,
- wobei die numerische Steuerung die lagegeregelten Achsen gemäß der Sequenz von Lagesollwerten ansteuert, wenn die Schutzkörper disjunkt voneinander bleiben, und anderenfalls die Ansteuerung der lagegeregelten Achsen unterdrückt und eine Fehlerreaktion ausführt,
- wobei der numerischen Steuerung ein Lagefehlerfeld bekannt ist, welches für beliebige Achssollwerte angibt, welche Istlage das Werkzeug relativ zum Werkstück einnimmt, wenn die lagegeregelten Achsen bei den jeweiligen Achssollwerten positioniert sind.

Die vorliegende Erfindung betrifft weiterhin ein Systemprogramm, das Maschinencode umfasst, der von einer numerischen Steuerung abarbeitbar ist, wobei die Abarbeitung des Maschinencodes durch die numerische Steuerung bewirkt, dass die numerische Steuerung ein derartiges Betriebsverfahren ausführt.

Die vorliegende Erfindung betrifft weiterhin eine numerische Steuerung, die mit einem derartigen Systemprogramm programmiert ist.

Die vorliegende Erfindung betrifft weiterhin eine Bearbeitungsmaschine, insbesondere eine Werkzeugmaschine,
- wobei die Bearbeitungsmaschine eine Mehrzahl von Maschinenelementen aufweist,
- wobei die Bearbeitungsmaschine eine Mehrzahl von lagegeregelten Achsen aufweist, mittels derer ein Teil der Maschinenelemente lagegeregelt verfahrbar sind,
- wobei die Bearbeitungsmaschine eine numerische Steuerung aufweist, von der die lagegeregelten Achsen angesteuert werden.

Bei Bearbeitungsmaschinen - beispielsweise Werkzeugmaschinen
- erfolgt ein koordiniertes Verfahren der lagegeregelten Achsen, damit das Werkstück mittels des Werkzeugs entsprechend einer durch das Teileprogramm definierten Bearbeitung bearbeitet wird.

Mittels des Teileprogramms wird in der Regel lediglich der sogenannte TCP (= tool center point) vorgegeben, also ein zentraler Punkt des Werkzeugs, das im Rahmen der Bearbeitung auf das Werkstück einwirkt. Die reale Kinematik der Bearbeitungsmaschine wird bei der Vorgabe des TCP nicht berücksichtigt. Aufgrund des Umstands, dass die reale Kinematik der Bearbeitungsmaschine im Rahmen der Ermittlung des Teileprogramms nicht vorab bekannt ist, kann im Rahmen des Teileprogramms nicht geprüft werden, ob eine gewünschte, durch das Teileprogramm definierte Bearbeitung mittels der realen Bearbeitungsmaschine möglich ist oder nicht. Insbesondere kann nicht geprüft werden, ob es im Rahmen der durch die reale Kinematik der Bearbeitungsmaschine vorzunehmenden Bewegungsvorgänge zu unerwünschten Kollisionen des Werkzeugs mit Maschinenelementen der Bearbeitungsmaschine oder dem Werkstück oder zu unerwünschten Kollisionen der Maschinenelemente untereinander oder mit dem Werkstück kommt.

Zur Vermeidung derartiger Kollisionen werden dem Werkzeug, dem Werkstück und den Maschinenelementen von der numerischen Steuerung virtuelle Volumina (= Schutzkörper) zugeordnet. Die Schutzkörper können - sowohl im Stand der Technik wie z.B. im DE 103 21 241 A1 als auch im Rahmen der vorliegenden Erfindung - als echte Volumina definiert sein. Alternativ ist es möglich, die Schutzkörper durch ihre Hüllkurven zu definieren. Wenn daher nachfolgend von den Schutzkörpern oder den entsprechenden Volumina die Rede ist, können alternativ ebenso die Hüllkurven gemeint sein.

Die Schutzkörper sind gemäß der realen Kinematik der Bearbeitungsmaschine miteinander verknüpft. Sie werden von der numerischen Steuerung im Rahmen eines sogenannten Vorlaufs, das heißt vor der realen Ansteuerung der Achsen, entsprechend der zu realisierenden Bewegung virtuell verfahren. Die numerische Steuerung prüft, ob sich im Rahmen dieser Verfahrbewegung die Schutzkörper durchdringen oder berühren. Wenn dies der Fall ist, bleiben die Schutzkörper nicht disjunkt voneinander. Es liegt somit eine unerwünschte Kollision vor. Anderenfalls kann die reale Ausführung des Teileprogramms erfolgen.

Im Teileprogramm sind die Lagesollwerte als ideale Lagesollwerte für eine ideale Bearbeitungsmaschine hinterlegt. Bei der Ermittlung des Teileprogramms wurde also davon ausgegangen, dass die jeweilige Positionierung des Werkzeugs relativ zum Werkstück völlig exakt der Sollwertvorgabe entspricht. Reale Bearbeitungsmaschinen weisen jedoch Abweichungen auf. Zu diesen Abweichungen gehören beispielsweise Offsets, Nullpunktverschiebungen, lineare Abweichungen und rotatorische Abweichungen. In der numerischen Steuerung ist daher oftmals ein Feld hinterlegt, das für die jeweilige Kombination von Achssollwerten den resultierenden Lagefehler angibt. Der numerischen Steuerung ist daher ein Lagefehlerfeld bekannt, welches für beliebige Achssollwerte angibt, welche Istlage das Werkzeug relativ zum Werkstück einnimmt, wenn die lagegeregelten Achsen bei den jeweiligen Achssollwerten positioniert sind. Der jeweilige Lagefehler ist in der Regel als Abweichung von der korrespondierenden Ideallage definiert, die sich ergäbe, wenn die Bearbeitungsmaschine völlig fehlerfrei konstruiert wäre. Alternativ kann auch die Istlage selbst hinterlegt sein. Unabhängig davon, welche Vorgehensweise ergriffen wird, ist die numerische Steuerung aufgrund des Lagefehlerfelds in der Lage, die Achssollwerte entsprechend zu korrigieren, so dass im Ergebnis der TCP korrekt, d.h. entsprechend der Vorgabe durch das Teileprogramm, positioniert wird. Der jeweilige Lagefehler umfasst - sowohl im Stand der Technik als auch im Rahmen der vorliegenden Erfindung - in der Regel zumindest den (translatorischen) Positionierungsfehler. Er kann - sowohl im Stand der Technik als auch im Rahmen der vorliegenden Erfindung - zusätzlich einen (rotatorischen) Orientierungsfehler mit einem, zwei oder drei Winkeln umfassen.

Im Stand der Technik wird das Lagefehlerfeld nur zur Korrektur bei der realen Ansteuerung verwendet, nicht jedoch im Rahmen des Vorlaufs bei der Ermittlung der Positionen der Schutzkörper und der darauf aufbauenden Prüfung auf Kollisionen.

Die Aufgabe der vorliegenden Erfindung besteht darin, Möglichkeiten zu schaffen, mittels derer Kollisionen zuverlässig vermieden werden können.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 9.

Erfindungsgemäß wird ein Betriebsverfahren der eingangs genannten Art dadurch ausgestaltet, dass die numerische Steuerung zumindest für einen Teil der Schutzkörper bei der Ermittlung der Volumina, die von den Schutzkörpern bei Ansteuerung der lagegeregelten Achsen gemäß der Sequenz von Lagesollwerten eingenommen würden, das Lagefehlerfeld berücksichtigt.

Es ist möglich, dass die numerische Steuerung für alle Schutzkörper bei der Ermittlung der eingenommenen Volumina das Lagefehlerfeld berücksichtigt. Diese Vorgehensweise ist zwar völlig exakt, ist jedoch in vielen Fällen nicht erforderlich. In der Regel ist es jedoch erforderlich, dass diejenigen Schutzkörper, bei denen die numerische Steuerung bei der Ermittlung der eingenommenen Volumina das Lagefehlerfeld berücksichtigt, das Werkzeug und einen Werkzeughalter umfassen. In analoger Weise ist es in der Regel ebenfalls erforderlich, dass diejenigen Schutzkörper, bei denen die numerische Steuerung bei der Ermittlung der eingenommenen Volumina das Lagefehlerfeld berücksichtigt, zumindest das Werkstück und einen Werkstückhalter umfassen. Soweit erforderlich, können in diese Vorgehensweise natürlich auch andere Schutzkörper mit einbezogen werden. Im Sinne einer Optimierung des zu betreibenden zusätzlichen Aufwands bei der Berücksichtigung des Lagefehlerfelds im Rahmen der Kollisionsprüfung ist es jedoch in der Regel angebracht, dass die numerische Steuerung das Lagefehlerfeld nur bei der Ermittlung der eingenommenen Volumina dieser Schutzkörper berücksichtigt. Bei den anderen Schutzkörpern wird in diesem Fall für die Ermittlung von deren jeweiliger Position von den mit den Lagesollwerten direkt korrespondierenden Achssollwerten - also ohne Berücksichtigung des Lagefehlerfelds - ausgegangen.

Bei vielen Bearbeitungsmaschinen folgen von einem ruhenden Grundkörper der Bearbeitungsmaschine aus gesehen die mittels der lagegeregelten Achsen verfahrenen Maschinenelemente sequenziell zum Werkzeug oder zum Werkstück hin aufeinander. In diesem Fall ist es oftmals ausreichend, wenn bei der Ermittlung der von einem mit einem bestimmten Maschinenelement korrespondierenden Schutzkörper eingenommenen Volumina nur die Achssollwerte derjenigen lagegeregelten Achsen berücksichtigt werden, welche auf Maschinenelemente wirken, die vom Grundkörper zum Werkzeug oder zum Werkstück gesehen zwischen dem Grundkörper und dem bestimmten Maschinenelement angeordnet sind. Es ist jedoch ebenso möglich, auch die Achssollwerte der weiteren lagegeregelten Achsen zu berücksichtigen. Dies kann insbesondere zur Berücksichtigung von elastischen Biegungen und dergleichen sinnvoll sein.

Die erfindungsgemäße Vorgehensweise lässt sich dadurch noch weiter optimieren, dass die numerische Steuerung im Rahmen der Ermittlung der von den Schutzkörpern eingenommenen Volumina zusätzlich zum Lagefehlerfeld auch eine Temperaturabhängigkeit und/oder elastische Effekte berücksichtigt.

Viele Bearbeitungsmaschinen sind als dreiachsige Maschinen ausgebildet, mittels derer das Werkzeug relativ zum Werkstück zwar translatorisch positioniert, nicht aber rotatorisch orientiert werden kann. Bei einer derartigen Bearbeitungsmaschine kann durch eine entsprechend korrigierte Ansteuerung der lagegeregelten Achsen zwar ein translatorischer Positionierungsfehler korrigiert werden, nicht aber ein rotatorischer Orientierungsfehler. Das Lagefehlerfeld - d.h. die in der numerischen Steuerung hinterlegte Beschreibung der Abweichung des TCP von seiner idealen Lage - kann zusätzlich zu dem translatorischen Positionierungsfehler auch den rotatorischen Orientierungsfehler definieren (auch wenn dieser nicht korrigiert werden kann). Wenn dies der Fall ist, berücksichtigt die numerische Steuerung im Rahmen der Ermittlung der von den Schutzkörpern eingenommenen Volumina vorzugsweise zusätzlich zum Positionierungsfehler auch den Orientierungsfehler. Dadurch lässt sich eine etwaige Kollision noch präziser vorhersagen bzw. vermeiden.

Wie bereits erwähnt, berücksichtigt die numerische Steuerung das Lagefehlerfeld auch bei der Ermittlung der Achssollwerte. Es ist möglich, dass die numerische Steuerung bei der Ermittlung der Achssollwerte - also der realen Ansteuerung der lagegeregelten Achsen - das Lagefehlerfeld stets berücksichtigt. Alternativ ist es möglich, dass der numerischen Steuerung von einem Benutzer ein Steuerbefehl vorgegeben wird und dass die numerische Steuerung je nach vorgegebenem Steuerbefehl das Lagefehlerfeld bei der Ermittlung der Achssollwerte berücksichtigt oder nicht berücksichtigt. Unabhängig hiervon wird das Lagefehlerfeld von der numerischen Steuerung jedoch in beiden Fällen zumindest für die Ermittlung der Volumina der Schutzkörper berücksichtigt.

Die Aufgabe wird weiterhin durch ein Systemprogramm mit den Merkmalen des Anspruchs 10 gelöst. Erfindungsgemäß bewirkt die Abarbeitung des Maschinencodes eines erfindungsgemäßen Systemprogramms, dass die numerische Steuerung ein erfindungsgemäßes Betriebsverfahren ausführt.

Die Aufgabe wird weiterhin durch eine numerische Steuerung mit den Merkmalen des Anspruchs 11 gelöst. Erfindungsgemäß ist die numerische Steuerung mit einem erfindungsgemäßen Systemprogramm programmiert.

Die Aufgabe wird weiterhin durch eine Bearbeitungsmaschine, insbesondere eine Werkzeugmaschine, mit den Merkmalen des Anspruchs 12 gelöst. Erfindungsgemäß wird eine Bearbeitungsmaschine der eingangs genannten Art dadurch ausgestaltet, dass die numerische Steuerung mit einem erfindungsgemäßen Systemprogramm programmiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine ideale Bearbeitungsmaschine von der Seite,
- FIG 2: die Bearbeitungsmaschine von FIG 1 von vorne,
- FIG 3: ein Teileprogramm,
- FIG 4 und 5: eine reale Bearbeitungsmaschine von vorne,
- FIG 6: ein Ablaufdiagramm,
- FIG 7: Maschinenelemente, ein Werkzeug und ein Werkstück sowie zugehörige Schutzkörper,
- FIG 8: eine numerische Steuerung und eine virtuelle Bearbeitungsmaschine,
- FIG 9: ein Ablaufdiagramm und
- FIG 10: einen Ausschnitt eines Lagefehlerfelds.

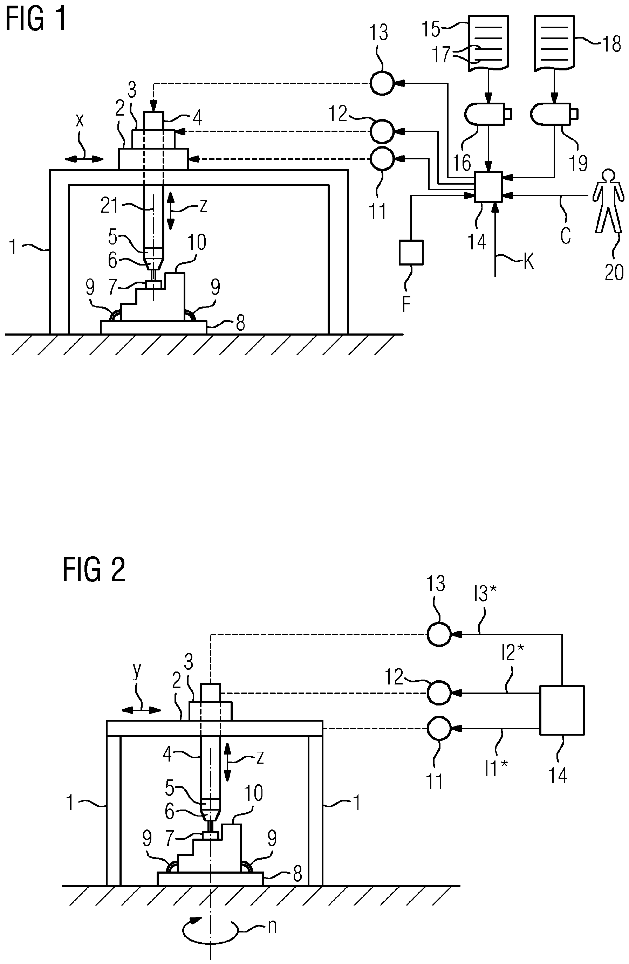

Gemäß den FIG 1 und 2 weist eine Bearbeitungsmaschine, beispielsweise eine Werkzeugmaschine, eine Mehrzahl von Maschinenelementen auf. Bei den Maschinenelementen kann es sich beispielsweise um folgende Elemente handeln:
- zwei Portalträger 1, die nicht verfahren werden, sondern sich stets an derselben Position befinden,
- eine Traverse 2, die auf den Portalträgern 1 in einer ersten translatorischen Richtung x linear verfahrbar ist,
- einen Träger 3, welcher auf der Traverse 2 in einer zweiten translatorischen Richtung y linear verfahrbar ist,
- einen Werkzeugarm 4, welcher bezüglich des Trägers 3 in einer dritten translatorischen Richtung z linear verfahrbar ist,
- einen Spindelantrieb 5, der am Ende des Werkzeugarms 4 angeordnet ist,
- einen Werkzeughalter 6, der ein Werkzeug 7 hält und der mittels des Spindelantriebs 5 mit einer vorbestimmten Drehzahl n rotiert wird, und
- einen Werkstücktisch 8, der nicht verfahren wird, sondern sich stets an derselben Position befindet, sowie
- Werkstückhalter 9, welche ein Werkstück 10 halten.

Die Richtungen x, y, z definieren in der Regel ein rechtwinkliges, kartesisches Koordinatensystem. Eine der drei Richtungen x, y, z - gemäß den FIG 1 und 2 die dritte Richtung z - verläuft in der Regel vertikal. Mittels des Werkzeugs 7 erfolgt die Bearbeitung des Werkstücks 10.

Einige der Maschinenelemente bilden einen Grundkörper der Bearbeitungsmaschine, der nicht verfahrbar oder bewegbar ist. Bei der Ausgestaltung der Bearbeitungsmaschine gemäß den FIG 1 und 2 sind dies beispielsweise die Portalträger 1 und der Werkstücktisch 8. Andere der Maschinenelemente sind mittels einer jeweiligen lagegeregelten Achse 11 bis 13 gegenüber dem Grundkörper oder gegenüber dem lagegeregelten Maschinenelement, an dem sie auf den Grundkörper zu angeordnet sind, lagegeregelt verfahrbar. Bei der Ausgestaltung der Bearbeitungsmaschine gemäß den FIG 1 und 2 sind dies beispielsweise die Traverse 2, der Träger 3 und der Werkzeugarm 4 mit dem daran angeordneten Spindelantrieb 5 und den weiteren vom Spindelantrieb 5 angetriebenen Komponenten 6, 7. Andere der Maschinenelemente sind gegenüber dem Grundkörper oder gegenüber dem lagegeregelten Maschinenelement, an dem sie auf den Grundkörper zu angeordnet sind, lediglich mittels einer nicht dargestellten Betätigungseinrichtung beispielsweise öffenbar und schließbar, nicht aber lagegeregelt verfahrbar. Bei der Ausgestaltung der Bearbeitungsmaschine gemäß den FIG 1 und 2 sind dies beispielsweise der Werkzeughalter 6 und der Werkstückhalter 9. Andere der Maschinenelemente sind gegenüber dem Grundkörper oder gegenüber dem lagegeregelten Maschinenelement, an dem sie auf den Grundkörper zu angeordnet sind, lediglich drehzahlgeregelt rotierbar, nicht aber lagegeregelt verfahrbar. Bei der Ausgestaltung der Bearbeitungsmaschine gemäß den FIG 1 und 2 können beispielsweise mittels des Spin¬delantriebs 5 der Werkzeughalter 6 und mit ihm das Werkzeug 7 drehzahlgeregelt rotierbar sein. Je nach Lage des Einzelfalls ist es jedoch ebenso möglich, dass auch ein Spindelantrieb lagegeregelt rotierbar ist. Dies kann beispielsweise bei einem Spindelantrieb der Fall sein, welcher das Werkstück 10 rotiert.

Die Ausgestaltung der Bearbeitungsmaschine gemäß den FIG 1 und 2 ist in verschiedener Hinsicht rein beispielhaft. So könnte die Bearbeitungsmaschine beispielsweise alternativ zu der dreiachsigen Ausgestaltung der FIG 1 und 2 vierachsig oder fünfachsig ausgebildet sein. In diesem Fall wären zusätzlich zu den drei translatorischen Richtungen x, y, z zusätzlich eine oder zwei Schwenkbewegungen des Werkzeugs 7 relativ zum Werkstück 10 realisierbar. Auch noch mehr lagegeregelte Achsen sind möglich. Weiterhin könnte die Gesamtbewegung des Werkzeugs 7 relativ zum Werkstück 10 ganz oder teilweise auf das Werkstück 10 verlagert sein. Weiterhin sind auch andere Kinematiken möglich, beispielsweise eine Ausgestaltung der Bearbeitungsmaschine als Roboter, als Tripod oder als Hexapod.

Die Bearbeitungsmaschine weist eine numerische Steuerung 14 auf. Die numerische Steuerung 14 ist mit einem Systemprogramm 15 programmiert. Das Systemprogramm 15 kann der numerischen Steuerung 14 beispielsweise über einen Datenträger 16 zugeführt werden, auf dem das Systemprogramm 15 in maschinenlesbarer Form (beispielsweise elektronischer Form) hinterlegt ist. Rein beispielhaft ist in den FIG 1 und 2 der Datenträger 16 als USB-Memorystick dargestellt. Auch eine Zuführung auf andere Weise ist möglich, beispielsweise über eine Anbindung an ein Datennetz. Das Systemprogramm 15 wird in der Regel vom Hersteller der numerischen Steuerung 14 in der numerischen Steuerung 14 hinterlegt und kann von einem Benutzer nicht geändert werden.

Das Systemprogramm 15 umfasst Maschinencode 17, der von der numerischen Steuerung abarbeitbar ist. Die Abarbeitung des Maschinencodes 17 durch die numerische Steuerung 14 bewirkt, dass die numerische Steuerung 14 ein Betriebsverfahren ausführt, das nachstehend näher erläutert wird.

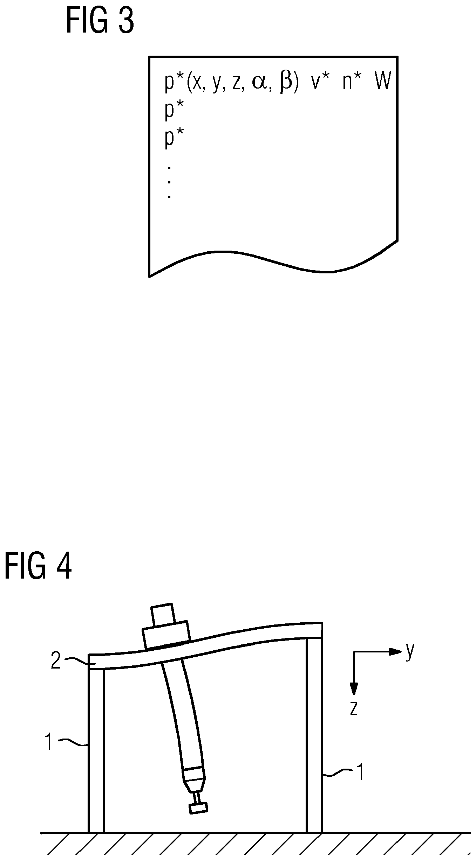

Der numerischen Steuerung 14 ist ein Teileprogramm 18 vorgegeben. Beispielsweise kann entsprechend der Darstellung in den FIG 1 und 2 das Teileprogramm 18 auf einem weiteren Datenträger 19 in maschinenlesbarer Form hinterlegt sein und der numerischen Steuerung über den weiteren Datenträger 19 zugeführt werden. Auch eine Zuführung auf andere Weise ist möglich, beispielsweise über eine Anbindung an ein Datennetz. Das Teileprogramm 18 enthält gemäß FIG 3 eine Sequenz von Lagesollwerten p*. Jeder Lagesollwert p* definiert eine Lage, die das Werkzeug 7 relativ zum Werkstück 10 einnehmen soll. Jeder Lagesollwert p* definiert also zumindest die Position des Werkzeugs 7 relativ zum Werkstück 10 in den drei translatorischen Richtungen x, y, z. Aus diesem Grund sind in FIG 3 beispielhaft für einen der Lagesollwerte p* die entsprechenden Koordinaten in den drei Richtungen x, y, z angegeben. Gegebenenfalls kann der Lagesollwert p* zusätzlich eine Orientierung des Werkzeugs 7 relativ zum Werkstück 10 mit bis zu drei Winkeln umfassen. Oftmals ist das Werkzeug 7 ein rotierendes Werkzeug. In einem derartigen Fall reichen entsprechend der Darstellung in FIG 3 zwei Winkel. Die Winkel sind in FIG 3 für den einen Lagesollwert p* mit α und β angegeben.

Oftmals sind dem jeweiligen Lagesollwert p* weitere Werte zugeordnet, wie beispielsweise ein Geschwindigkeitssollwert v*, ein Drehzahlsollwert n* und/oder eine Zusatzinformation W. Der Geschwindigkeitssollwert v* gibt an, wie schnell das Werkzeugs 7 bei dem betreffenden Lagesollwert p* relativ zum Werkstück 10 verfahren werden soll. Der Drehzahlsollwert n* gibt an, mit welcher Drehzahl der Spindelantrieb 5 den Werkzeughalter 6 und das Werkzeug 7 rotieren soll. Die Zusatzinformation W kann beispielsweise definieren, welches von mehreren möglichen Werkzeugen 7 verwendet werden soll.

Zu Beginn des Betriebsverfahrens ermittelt die numerische Steuerung 14 für jede lagegeregelte Achse 11 bis 13 anhand der Lagesollwerte p* jeweils einen zugehörigen Achssollwert li* (mit beispielsweise i = 1, 2 oder 3, je nachdem, für welche lagegeregelte Achse 11 bis 13 der jeweilige Achssollwert li* bestimmt ist, siehe FIG 2). Wäre die Bearbeitungsmaschine entsprechend der Darstellung in den FIG 1 und 2 ideal, könnten die Achssollwerte li* direkt anhand des jeweiligen Lagesollwertes p* ermittelt werden. In der Praxis ergeben sich jedoch gewisse Abweichungen. Dies wird nachstehend in Verbindung mit den FIG 4 bis 6 näher erläutert, welche in stark übertriebener Darstellung die der vorliegenden Erfindung zu Grunde liegende Problematik zeigen.

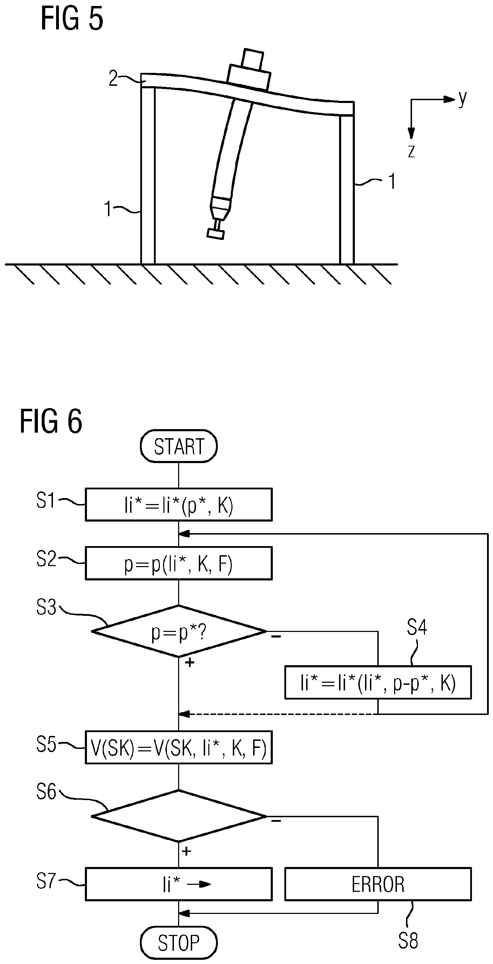

Die einzelnen Maschinenelemente 1 bis 6, 8 und 9 der Bearbeitungsmaschine sind nicht völlig ideal. Wenn beispielsweise die Traverse 2 auf den Portalträgern 1 in x-Richtung verfahren wird, ergäbe sich bei einer idealen Bearbeitungsmaschine - so wie in den FIG 1 und 2 dargestellt - eine rein lineare Bewegung des Werkzeugs 7. Bei einer realen Bearbeitungsmaschine kann es jedoch geschehen, dass die verschiedensten Positionierungsfehler auftreten können, wobei der Positionierungsfehler sowohl bezüglich der Traverse 2 als solcher als auch bezüglich des Werkzeugs 7 entlang der Position der Traverse 2 in x-Richtung variieren kann. So kann beispielsweise entsprechend der Darstellung in FIG 4 bei einer bestimmten Position in x-Richtung der in den FIG 4 und FIG 5 rechte Portalträger 1 geringfügig höher sein als der in den FIG 4 und 5 linke Portalträger 1. Bei einer anderen Position in x-Richtung können die beiden Portalträger 1 gleich hoch sein oder entsprechend der Darstellung in FIG 5 sogar der in den FIG 4 und 5 linke Portalträger 1 geringfügig höher sein als der in den FIG 4 und 5 rechte Portalträger 1. Auch andere Fehlpositionierungen sind möglich.

Es ist ohne weiteres ersichtlich, dass in einem derartigen Fall diejenigen Maschinenelemente, die mittels der Traverse 2 verfahren werden, ebenfalls falsch positioniert werden. So führt beispielsweise der obenstehend erläuterte Fehler dazu, dass das Werkzeug 7 bei der in FIG 4 dargestellten Situation in y-Richtung gesehen nach rechts ausgelenkt wird, bei der in FIG 5 dargestellten Situation nach links. Weiterhin ändert sich auch die Orientierung des Werkzeugs 7 relativ zum Werkstück 10.

Im Ergebnis kann daher eine - wenn auch in der Praxis nur geringfügige - Abweichung der Verfahrbewegung der Traverse 2 bezüglich der Lage des Werkzeugs 7 relativ zum Werkstück 10 einen Fehler in allen drei Richtungen x, y, z und auch einen Fehler in der Orientierung des Werkzeugs 7 relativ zum Werkstück 10 hervorrufen.

In analoger Weise kann beispielsweise die Traverse 2 entsprechend der Darstellung in den FIG 4 und 5 geringfügig gebogen sein. Auch hier führt diese Abweichung der Traverse 2 von ihrer Idealform dazu, dass bei einem Verfahren des Trägers 3 in y-Richtung ein Positionierungsfehler des Werkzeugs 7 auftritt. Auch hier kann eine - wenn auch in der Praxis nur geringfügige - Abweichung der Verfahrbewegung des Trägers 3 bezüglich der Lage des Werkzeugs 7 relativ zum Werkstück 10 einen Fehler in allen drei Richtungen x, y, z und auch einen Fehler in der Orientierung des Werkzeugs 7 relativ zum Werkstück 10 hervorrufen. Ähnliche Ausführungen gelten für die anderen mittels der lagegeregelten Achsen 11 bis 13 verfahrenen Maschinenelemente, beispielsweise den Werkzeugarm 4.

Um derartige Positionierungsfehler korrigieren zu können, ist der numerischen Steuerung 14 gemäß FIG 1 ein Lagefehlerfeld F bekannt. Das Lagefehlerfeld F enthält für beliebige Kombinationen von Achssollwerten li* (bzw. zumindest für hinreichend viele Kombinationen, so dass für Zwischenwerte eine Interpolation möglich ist) den jeweils korrespondierenden Lagefehler F(li*).

Es kann möglich sein, bei gegebenem Lagesollwert p* und bekanntem Lagefehlerfeld F direkt die Achssollwerte li* zu ermitteln, bei welchen der entsprechende Lagefehler F(li*) korrigiert ist. In jedem Fall ist zur Ermittlung der Achssollwerte li* aber eine Vorgehensweise möglich, die sie nachfolgend in Verbindung mit FIG 6 erläutert wird.

Gemäß FIG 6 ermittelt die numerische Steuerung 14 in einem Schritt S1 zunächst anhand der Lagesollwerte p* und der (der numerischen Steuerung 14 selbstverständlich bekannten) idealen Kinematik K der Bearbeitungsmaschine die jeweiligen Achssollwerte li*. In einem Schritt S2 ermittelt die numerische Steuerung 14 anhand der soeben ermittelten Achssollwerte li*, der Kinematik K und dem Lagefehlerfeld F die sich jeweils ergebenden Lageistwerte p. Der jeweilige Lageistwert p weist - analog zu den Lagesollwerten p* - zumindest in den drei translatorischen Richtungen x, y, z jeweils eine Koordinate auf. Der jeweilige Lageistwert p kann weiterhin - auch hier wieder analog zu den Lagesollwerten p* - bis zu drei Winkel umfassen.

In einem Schritt S3 prüft die numerische Steuerung 14, ob die im Schritt S2 ermittelten Lageistwerte p mit den zugehörigen Lagesollwerten p* (innerhalb zulässiger, vordefinierter Toleranzen) übereinstimmen. Wenn dies nicht der Fall ist, geht die numerische Steuerung 14 zu einem Schritt S4 über. Im Schritt S4 ermittelt die numerische Steuerung 14, ausgehend von den Achssollwerten li*, der Abweichung der Lageistwerte p von den Lagesollwerten p* und der Kinematik K der Bearbeitungsmaschine neue, modifizierte Achssollwerte li*. Sodann geht die numerische Steuerung 14 zum Schritt S2 zurück. Anderenfalls, wenn also die ermittelten Lageistwerte p mit den zugehörigen Lagesollwerten p* übereinstimmen, ist die Ermittlung der Achssollwerte li* beendet.

Im Rahmen der obenstehend in Verbindung mit FIG 6 erläuterten Vorgehensweise werden die Achssollwerte li* iterativ bestimmt. Es kann unter Umständen jedoch entsprechend der in FIG 6 gestrichelt eingezeichneten Variante möglich sein, die Achssollwerte li* nur einmalig zu korrigieren. In diesem Fall geht die numerische Steuerung 14 vom Schritt S4 direkt zu einem Schritt S5 über.

Prinzipiell wäre nunmehr aufgrund der Ermittlung der korrekten Achssollwerte li* die Ansteuerung der lagegeregelten Achsen 11 bis 13 durch die numerische Steuerung 14 möglich. Würde diese nunmehr vorgenommen, bestünde jedoch die Gefahr von Kollisionen. Insbesondere könnte das Werkzeug 7 mit Maschinenelementen 1 bis 3, 8, 9 oder (im Falle einer kontaktbehafteten Bearbeitung, beispielsweise einer spanenden Bearbeitung, selbstverständlich mit Ausnahme der Stelle des Werkstücks 10, die durch das Werkzeug 7 bearbeitet werden soll) mit dem Werkstück 10 kollidieren. Ebenso könnte ein bewegtes Maschinenelement 2 bis 6 mit einem anderen Maschinenelement 1 bis 6, 8, 9 oder dem Werkstück 10 kollidieren.

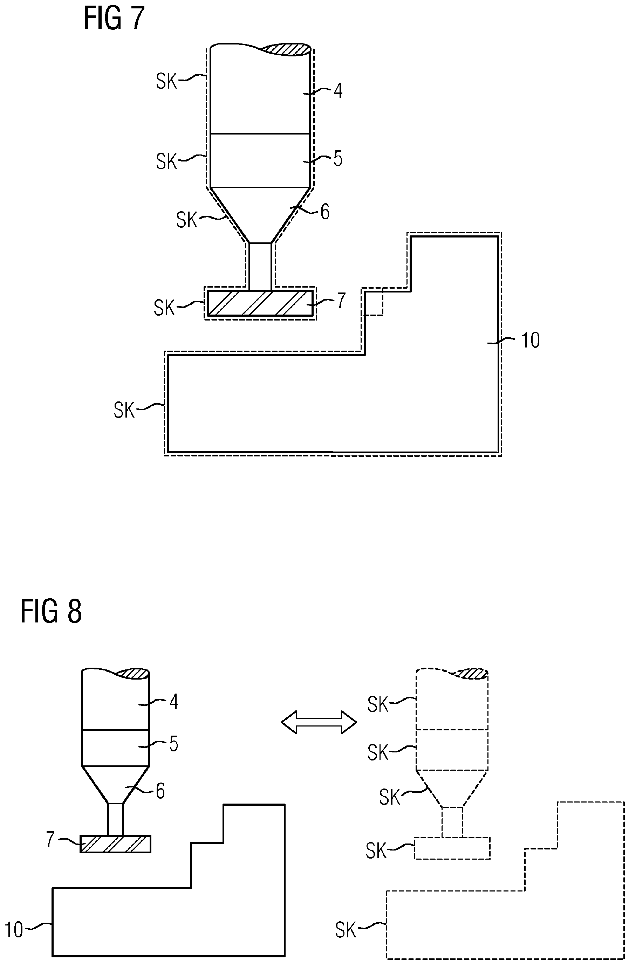

Um die Gefahr derartiger Kollisionen auszuschließen bzw. zumindest so niedrig wie möglich zu halten, sind den Maschinenelementen 1 bis 6, 8, 9, dem Werkstück 10 und dem Werkzeug 7 innerhalb der numerischen Steuerung 14 virtuelle Schutzkörper SK zugeordnet. Die Schutzkörper SK sind in FIG 7 exemplarisch für den an den Spindelantrieb 5 angrenzenden Abschnitt des Werkzeugsarms 4, den Spindelantrieb 5, den Werkzeughalter 6, das Werkzeug 7 und das Werkstück 10 gestrichelt eingezeichnet. Die Schutzkörper SK sind so definiert, dass sie so gut wie möglich mit dem jeweils zugeordneten Maschinenelement 1 bis 6, 8, 9, dem Werkstück 10 und dem Werkzeug 7 übereinstimmen.

Wenn die Achssollwerte li* ermittelt sind, geht die numerische Steuerung 14, wie bereits erwähnt, zum Schritt S5 über. Im Schritt S5 ermittelt die numerische Steuerung 14 Volumina V. Insbesondere ermittelt die numerische Steuerung 14 im Schritt S5 für jede für einen bestimmten Lagesollwert p* ermittelte Kombination von Achssollwerten li* die Volumina V, die von den Schutzkörpern SK jeweils eingenommen würden, wenn die lagegeregelten Achsen 11 bis 13 entsprechend der Sequenz von Lagesollwerten p* (bzw. der korrespondierenden Sequenzen von Achssollwerten li*) angesteuert würden. Die Schutzkörper SK bilden also sozusagen entsprechend der Darstellung in FIG 8 ein virtuelles Abbild der Bearbeitungsmaschine und werden virtuell verfahren.

Die numerische Steuerung 14 berücksichtigt im Schritt S5 bei der Ermittlung der Volumina V - zumindest für einen Teil der Schutzkörper SK - zusätzlich zu den Achssollwerten li* auch das Lagefehlerfeld F. Sofern die numerische Steuerung 14 das Lagefehlerfeld F berücksichtigt, ermittelt die numerische Steuerung 14 im Rahmen des Schrittes S5 für den jeweiligen Schutzkörper SK das korrekte Volumen V, also insbesondere dessen Lage und Position. Die numerische Steuerung 14 berücksichtigt also beispielsweise, dass - siehe beispielhaft FIG 4 - die Traverse 2 in z-Richtung gesehen nicht exakt über dem Werkzeug 7 steht, sondern schräg verläuft. Es wird also bei der Ermittlung des entsprechenden Volumens V nicht nur berücksichtigt, dass aufgrund der Abweichungen der realen Bearbeitungsmaschine von der idealen Bearbeitungsmaschine die Achssollwerte li* als solche andere Werte aufweisen. Es wird vielmehr auch die Ursache für die abweichenden Achssollwerte li* berücksichtigt, also beispielsweise die Schieflage des Werkzeugarms 4 aufgrund einer einseitigen Anhebung der Traverse 2. Analoge Ausführungen gelten für die anderen Schutzkörper SK.

In einem Schritt S6 prüft die numerische Steuerung 14, ob die Schutzkörper SK im Rahmen der mittels des Schrittes S5 simulierten Verfahrbewegung disjunkt voneinander bleiben. Eine Ausnahme bildet hierbei im Falle einer kontaktbehafteten Bearbeitung, beispielsweise einer spanenden Bearbeitung, die (gewünschte) Bearbeitung des Werkstücks 10 durch das Werkzeug 7. An dieser Stelle wird ein Kontakt des dem Werkzeug 7 zugeordneten Schutzkörpers SK mit dem dem Werkstück 10 zugeordneten Schutzkörper SK zugelassen. Die Stelle des Werkstücks 10, an welcher der Kontakt zugelassen wird, kann zeitlich variieren. Weiterhin kann insbesondere der dem Werkstück 10 zugeordnete Schutzkörper SK zeitlich entsprechend der Bearbeitung durch das Werkzeug 7 variieren.

Je nach Ergebnis der Prüfung des Schrittes S6 geht die numerische Steuerung 14 zu einem Schritt S7 oder zu einem Schritt S8 über. Der Schritt S7 wird ausgeführt, wenn die Schutzkörper SK disjunkt voneinander bleiben. In diesem Fall steuert die numerische Steuerung 14 die lagegeregelten Achsen 11 bis 13 gemäß der Sequenz von Lagesollwerten p* an, genauer gemäß der Sequenz von ermittelten Achssollwerten li*. Der Schritt S8 wird ausgeführt, wenn die Schutzkörper SK nicht disjunkt voneinander bleiben. In diesem Fall wird von der numerischen Steuerung 14 die Ansteuerung der lagegeregelten Achsen 11 bis 13 unterdrückt. Ferner wird eine Fehlerreaktion ausgeführt, beispielsweise an einen Bediener 20 (siehe FIG 1) eine Fehlermeldung ausgegeben.

Es ist möglich, das erfindungsgemäße Verfahren - d.h. das Verfahren gemäß FIG 6 - mit der erfindungsgemäßen Ausgestaltung des Schrittes S5 - für alle Schutzkörper SK auszuführen. In vielen Fällen sind jedoch nur das Werkzeug 7, das Werkstück 10 und die an das Werkzeug 7 und an das Werkstück 10 angrenzenden Maschinenelemente kritisch. Kritisch bedeutet im Rahmen der vorliegenden Erfindung, dass einerseits im Rahmen der Bearbeitung des Werkstücks 10 durch das Werkzeug 7 die Möglichkeit besteht, dass die entsprechenden Elemente sehr nahe aneinander heran geführt werden müssen, aber dennoch nicht miteinander kollidieren dürfen. Bei diesen Elementen ist also eine hochgenaue Modellierung der realen Bearbeitungsmaschine und des realen Werkstücks 10 durch die entsprechenden Schutzkörper SK und die von den entsprechenden Schutzkörpern SK jeweils eingenommenen Volumina V erforderlich. Die Schutzkörper SK, bei denen die numerische Steuerung 14 bei der Ermittlung der eingenommenen Volumina V das Lagefehlerfeld F berücksichtigt, sollten daher auf Seiten des Werkzeugs 7 zumindest die Schutzkörper SK für das Werkzeug 7 und den Werkzeughalter 6 umfassen. Falls das Werkzeug 7 ein rotierendes Werkzeug ist (beispielsweise ein Bohrer oder einen Fräser), kann die gleiche Vorgehensweise auch für den Schutzkörper SK für den Spindelantrieb 5 ergriffen werden. Weiterhin sollten die Schutzkörper SK, bei denen die numerische Steuerung 14 bei der Ermittlung der eingenommenen Volumina V das Lagefehlerfeld F berücksichtigt, auf Seiten des Werkstücks 10 zumindest die Schutzkörper SK für das Werkstück 10 und den oder die Werkstückhalter 9 umfassen.

Bei allen anderen Maschinenelementen - im Falle der Ausgestaltung der Bearbeitungsmaschine entsprechend den Erläuterungen zu FIG 1 und 2 beispielsweise den Portalträgern 1, der Traverse 2 und dem Träger 3 - besteht oftmals von vorneherein nicht das Bedürfnis, die entsprechenden Elemente in unmittelbare Nähe zu den anderen Elementen zu bringen. In diesem Fall kann die Gefahr von Kollisionen zwar ebenfalls durch die erfindungsgemäße hochgenaue Modellierung ausgeschlossen werden. Bei den anderen Maschinenelementen ist es jedoch alternativ ebenso möglich (und in der Regel aus Gründen der einfacheren und schnelleren Berechenbarkeit vorzuziehen), dass die numerische Steuerung 14 das Lagefehlerfeld F bei den diesen Maschinenelementen zugeordneten Schutzkörpern SK nicht berücksichtigt. Das Lagefehlerfeld F wird also vorzugsweise nur bei den Schutzkörpern SK berücksichtigt, die den oben genannten Maschinenelementen 5, 6, 9, dem Werkzeug 7 und dem Werkstück 10 zugeordnet sind.

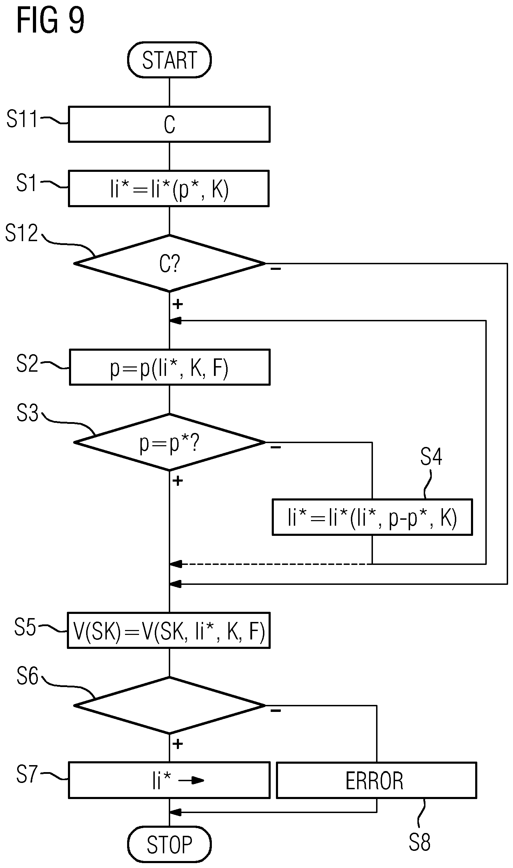

Im Rahmen der obenstehend in Verbindung mit FIG 6 erläuterten Vorgehensweise berücksichtigt die numerische Steuerung 14 das Lagefehlerfeld F sowohl bei der Ermittlung der Achssollwerte li* als auch bei der Ermittlung der von den Schutzkörpern SK eingenommenen Volumina V. Diese Vorgehensweise ist im Regelfall vorzuziehen. Es ist jedoch möglich, dass der Bediener 20 der numerischen Steuerung 14 entsprechend der Darstellung in FIG 1 einen Steuerbefehl C vorgibt. Der Steuerbefehl C kann (mindestens) zwei verschiedene Werte annehmen. Falls diese Ausgestaltung realisiert ist, wird die Vorgehensweise von FIG 6 entsprechend der Darstellung in FIG 9 modifiziert.

FIG 9 umfasst die Schritte S1 bis S8 von FIG 6. Zu den Schritten S1 bis S8 sind daher keine weiteren Ausführungen erforderlich. Zusätzlich umfasst FIG 9 Schritte S11 und S12. Im Schritt S11 nimmt die numerische Steuerung 14 vom Bediener 20 den Steuerbefehl C entgegen. Im Schritt S12 prüft die numerische Steuerung 14, welchen Wert der Steuerbefehl C aufweist. Je nach Wert des Steuerbefehls C geht die numerische Steuerung 14 entweder zum Schritt S2 über oder überspringt die aus den Schritten S2 bis S4 bestehende Iterationsschleife. Im letztgenannten Fall geht die numerische Steuerung 14 somit, ausgehend vom Schritt S12, direkt zum Schritt S5 über.

Im Ergebnis berücksichtigt die numerische Steuerung 14 somit bei der Ermittlung der Achssollwerte li* im einen Fall das Lagefehlerfeld F und berücksichtigt das Lagefehlerfeld F im anderen Fall nicht. In beiden Fällen wird jedoch bei der Ermittlung der von den Schutzkörpern SK eingenommenen Volumina V die erfindungsgemäße Vorgehensweise des Schrittes S5 ergriffen.

Bei vielen Bearbeitungsmaschinen - siehe die Ausführungen zu den FIG 1 und 2 - folgen von einem ruhenden Grundkörper der Bearbeitungsmaschine aus gesehen die mittels der lagegeregelten Achsen 11 bis 13 verfahrenen Maschinenelemente 2 bis 4 sequenziell zum Werkzeug 7 hin aufeinander. Beispielsweise bewirkt, wie obenstehend in Verbindung mit den FIG 1 und 2 erläutert, das Verfahren der Traverse 2 zugleich auch eine geänderte Positionierung der nachfolgenden Maschinenelemente 3 bis 6 und des Werkzeugs 7. In analoger Weise bewirkt das Verfahren des Trägers 3 zugleich auch eine geänderte Positionierung der nachfolgenden Maschinenelemente 4 bis 6 und des Werkzeugs 7, nicht aber eine geänderte Positionierung der Traverse 2. Analoge Ausführungen sind für den Werkzeugarm 4 gültig. Analoge Ausführungen sind weiterhin auch bezüglich des Werkstücks 10 gültig, sofern das Werkstück 10 sequenziell über mehrere lagegeregelte Achsen verfahren wird.

Wenn die Maschinenelemente 1 bis 6, 8, 9 hinreichend steif ausgebildet sind, ist es möglich, bei der Ermittlung des von einem jeweiligen der Schutzkörper SK eingenommenen Volumens V nur die Achssollwerte li* der vorgeordneten lagegeregelten Achsen 11 bis 13 zu berücksichtigen. Es ist also möglich, nur die Achssollwerte li* derjenigen lagegeregelten Achsen 11 bis 13 zu berücksichtigen, welche auf Maschinenelemente 1 bis 6, 8, 9 wirken, die vom Grundkörper zum Werkzeug 7 oder zum Werkstück 10 gesehen auf zwischen dem Grundkörper und dem bestimmten Maschinenelement 3, 4 angeordnet sind. Bei der beispielhaften Ausgestaltung der Bearbeitungsmaschine entsprechend den FIG 1 und 2 ist es also möglich, bei der Ermittlung des Volumens V, das von dem der Traverse 2 zugeordneten Schutzkörper SK eingenommen wird, ausschließlich den jeweiligen Achssollwert 11* für die lagegeregelte Achse 11 zu berücksichtigen, mittels derer die Traverse 2 verfahren wird. In analoger Weise ist es möglich, bei der Ermittlung des Volumens V, das von dem dem Träger 3 zugeordneten Schutzkörper SK eingenommen wird, ausschließlich die Achssollwerte 11*, 12* für die lagegeregelten Achsen 11 und 12 zu berücksichtigen, mittels derer die Traverse 2 und der Träger 3 verfahren werden. Bei der Ermittlung des Volumens V, das von dem dem Werkzeugarm 4 zugeordneten Schutzkörper SK eingenommen wird, müssen hingegen die Achssollwerte li* für alle drei lagegeregelten Achsen 11 bis 13 berücksichtigt werden.

Alternativ kann auch der Fall auftreten, dass die Maschinenelemente 1 bis 6, 8, 9 bzw. einige dieser Maschinenelemente nicht als völlig steif angenommen werden können. In diesem Fall berücksichtigt die numerische Steuerung 14 im Rahmen der Ermittlung der von den Schutzkörpern SK eingenommenen Volumina V vorzugsweise zusätzlich zum Lagefehlerfeld F auch elastische Effekte beispielsweise aufgrund von Biegemomenten. Das Ausmaß einer elastischen Verformung eines bestimmten Maschinenelements ist in der Regel (zumindest unter anderem) auch von der Positionierung nachgeordneter Maschinenelemente abhängig. In diesem Fall wird daher in der Regel nicht die Vorgehensweise ergriffen, bei der Ermittlung des von einem jeweiligen der Schutzkörper SK eingenommenen Volumens V nur die Achssollwerte li* der vorgeordneten lagegeregelten Achsen 11 bis 13 zu berücksichtigen. Alternativ oder zusätzlich zur Berücksichtigung elastischer Effekte ist es weiterhin möglich, auch eine Temperaturabhängigkeit mit berücksichtigen.

FIG 5 zeigt zusätzlich eine weitere Problematik. Bei der Darstellung in FIG 5 ist - als einziger Unterschied zu den FIG 1, 2 und 4 - angenommen, dass zusätzlich zur translatorischen Position auch die rotatorische Orientierung des Werkzeugs 7 relativ zum Werkstück 10 eingestellt werden kann. Wenn beispielsweise - siehe FIG 1 - eine Rotationsachse 21 des Spindelantriebs 5 parallel zur z-Achse orientiert sein soll, so kann diese Orientierung auch dann eingenommen werden, wenn die obenstehend erwähnten Positionierungsfehler auftreten. Die Korrektur der Orientierung ist zwar bei einer fünfachsigen Maschine möglich, nicht aber bei einer dreiachsigen Maschine, bei welcher (im Idealfall) nur die drei translatorischen Richtungen x, y, z eingestellt werden können.

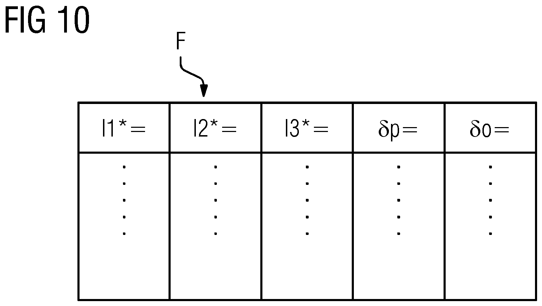

Nachfolgend wird dieser Fall betrachtet, dass also die Bearbeitungsmaschine als dreiachsige Maschine ausgebildet ist, mittels derer das Werkzeug 7 relativ zum Werkstück 10 zwar translatorisch positioniert, nicht aber rotatorisch orientiert werden kann. In diesem Fall ist es möglich, dass das Lagefehlerfeld F ausschließlich einen translatorischen Positionierungsfehler δp definiert. Ein rotatorischer Orientierungsfehler δo kann in diesem Fall durch das Lagefehlerfeld F zwar definiert sein, jedoch nicht korrigiert werden. Es ist beispielsweise möglich, dass das Lagefehlerfeld F entsprechend der Darstellung in FIG 10 explizit zusätzlich zum Positionierungsfehler δp den Orientierungsfehler δo umfasst. Alternativ kann der Orientierungsfehler δo beispielsweise anhand von Verläufen des Positionierungsfehlers δp als Funktion der Achssollwerte li* ermittelbar sein. Unabhängig davon, welcher dieser Fälle vorliegt, ist es möglich, dass die numerische Steuerung 14 im Rahmen der Ermittlung der von den Schutzkörpern SK eingenommenen Volumina V zusätzlich zum Positionierungsfehler δp auch den Orientierungsfehler δo berücksichtigt.

In der Regel stellen die Achssollwerte li* Eingangsgrößen des Lagefehlerfelds F dar, der Positionierungsfehler δp und gegebenenfalls auch der Orientierungsfehler δo Ausgangsgrößen. Prinzipiell ist jedoch ebenso eine inverse Verwendung des Lagefehlerfelds F möglich.

Zusammengefasst betrifft die vorliegende Erfindung somit folgenden Sachverhalt: Einer numerischen Steuerung 14 einer Bearbeitungsmaschine ist ein Teileprogramm 18 vorgegeben, das eine Sequenz von Lagesollwerten p* für ein Werkzeug 7 der Bearbeitungsmaschine relativ zu einem zu bearbeitenden Werkstück 10 aufweist. Die numerische Steuerung 14 ermittelt anhand der Lagesollwerte p* für auf Maschinenelemente 2 bis 4 der Bearbeitungsmaschine wirkende lagegeregelte Achsen 11 bis 13 der Bearbeitungsmaschine jeweils einen Achssollwert li*. Den Maschinenelementen 1 bis 6, 8, 9, dem Werkstück 10 und dem Werkzeug 7 sind innerhalb der numerischen Steuerung 14 virtuelle Schutzkörper SK zugeordnet. Die numerische Steuerung 14 ermittelt vor dem Ansteuern der lagegeregelten Achsen 11 bis 13 Volumina V, die von den Schutzkörpern SK bei Ansteuerung der lagegeregelten Achsen 11 bis 13 eingenommen würden, und prüft, ob die Schutzkörper SK hierbei disjunkt voneinander bleiben. Je nach Ergebnis der Prüfung steuert die numerische Steuerung 14 die lagegeregelten Achsen 11 bis 13 gemäß den Lagesollwerten p* an oder unterdrückt die Ansteuerung und führt eine Fehlerreaktion aus. Der numerischen Steuerung ist ein Lagefehlerfeld F bekannt, welches für beliebige Achssollwerte li* angibt, welche Istlage p das Werkzeug 7 relativ zum Werkstück 10 jeweils einnimmt. Die numerische Steuerung 14 berücksichtigt zumindest für einen Teil der Schutzkörper SK bei der Ermittlung der Volumina V, die von den Schutzkörpern SK bei Ansteuerung der lagegeregelten Achsen 11 bis 13 gemäß den Lagesollwerten p* eingenommen würden, das Lagefehlerfeld F.

Die vorliegende Erfindung weist viele Vorteile auf. Insbesondere ist eine überlegene, hochgenaue Modellierung der Bewegung der Maschinenelemente 1 bis 6, 8, 9, des Werkzeugs 7 und des Werkstücks 10 und damit auch eine hochgenaue Kollisionsüberwachung im Rahmen des sogenannten Vorlaufs möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Bearbeitungsmaschine, insbesondere eine Werkzeugmaschine,
- wobei einer numerischen Steuerung (14) der Bearbeitungsmaschine ein Teileprogramm (18) vorgegeben ist, das eine Sequenz von Lagesollwerten (p*) für ein Werkzeug (7) der Bearbeitungsmaschine relativ zu einem mittels des Werkzeugs (7) zu bearbeitenden Werkstück (10) aufweist,
- wobei die numerische Steuerung (14) anhand der Lagesollwerte (p*) für eine Mehrzahl von auf Maschinenelemente (2 bis 4) der Bearbeitungsmaschine wirkenden lagegeregelten Achsen (11 bis 13) der Bearbeitungsmaschine jeweils einen Achssollwert (li*) ermittelt,
- wobei den Maschinenelementen (1 bis 6, 8, 9), dem Werkstück (10) und dem Werkzeug (7) innerhalb der numerischen Steuerung (14) virtuelle Schutzkörper (SK) zugeordnet sind,
- wobei die numerische Steuerung (14) vor dem Ansteuern der lagegeregelten Achsen (11 bis 13) Volumina (V) ermittelt, die von den Schutzkörpern (SK) bei Ansteuerung der lagegeregelten Achsen (11 bis 13) gemäß der Sequenz von Lagesollwerten (p*) eingenommen würden, und prüft, ob - soweit erforderlich, mit Ausnahme der durch das Werkzeug (7) am Werkstück (10) vorzunehmenden Bearbeitung - die Schutzkörper (SK) hierbei disjunkt voneinander bleiben,
- wobei die numerische Steuerung (14) die lagegeregelten Achsen (11 bis 13) gemäß der Sequenz von Lagesollwerten (p*) ansteuert, wenn die Schutzkörper (SK) disjunkt voneinander bleiben, und anderenfalls die Ansteuerung der lagegeregelten Achsen (11 bis 13) unterdrückt und eine Fehlerreaktion ausführt,
**dadurch gekennzeichnet, dass** der numerischen Steuerung ein Lagefehlerfeld (F) be kannt ist, welches für beliebige Achssollwerte (li*) angibt, welche Istlage (p) das Werkzeug (7) relativ zum Werkstück (10) einnimmt, wenn die lagegeregelten Achsen (11 bis 13) bei den jeweiligen Achssollwerten (li*) positioniert sind, wobei die numerische Steuerung (14) zumindest für einen Teil der Schutzkörper (SK) bei der Ermittlung der Volumina (V), die von den Schutzkörpern (SK) bei Ansteuerung der lagegeregelten Achsen (11 bis 13) gemäß der Sequenz von Lagesollwerten (p*) eingenommen würden, das Lagefehlerfeld (F) berücksichtigt.

2. Betriebsverfahren nach Anspruch 1,
**dadurch gekennzeichnet,**
**dass** diejenigen Schutzkörper (SK), bei denen die numerische Steuerung (14) bei der Ermittlung der eingenommenen Volumina (V) das Lagefehlerfeld (F) berücksichtigt, zumindest das Werkzeug (7) und einen Werkzeughalter (6) umfassen.

3. Betriebsverfahren nach Anspruch 1 oder 2,
**dadurch gekennzeichnet,**
**dass** diejenigen Schutzkörper (SK), bei denen die numerische Steuerung (14) bei der Ermittlung der eingenommenen Volumina (V) das Lagefehlerfeld (F) berücksichtigt, zumindest das Werkstück (10) und einen Werkstückhalter (9) umfassen.

4. Betriebsverfahren nach Anspruch 2 oder 3,
**dadurch gekennzeichnet,**
**dass** die numerische Steuerung (14) das Lagefehlerfeld (F) nur bei der Ermittlung der eingenommenen Volumina (V) dieser Schutzkörper (SK) berücksichtigt.

5. Betriebsverfahren nach einem der Ansprüche 1 bis 4,
**dadurch gekennzeichnet,**
**dass** von einem ruhenden Grundkörper (1, 8) der Bearbeitungsmaschine aus gesehen die mittels der lagegeregelten Achsen (11 bis 13) verfahrenen Maschinenelemente (2 bis 4) sequenziell zum Werkzeug (7) oder zum Werkstück (10) hin aufeinander folgen und dass bei der Ermittlung der von einem mit einem bestimmten Maschinenelement (2 bis 4) korrespondierenden Schutzkörper (SK) eingenommenen Volumina (V) nur die Achssollwerte (li*) derjenigen lagegeregelten Achsen (11 bis 13) berücksichtigt werden, welche auf Maschinenelemente (2 bis 4) wirken, die vom Grundkörper (1, 8) zum Werkzeug (7) oder zum Werkstück (10) gesehen auf zwischen dem Grundkörper (1, 8) und dem bestimmten Maschinenelement (2 bis 4) angeordnet sind.

6. Betriebsverfahren nach einem der Ansprüche 1 bis 4,
**dadurch gekennzeichnet,**
**dass** die numerische Steuerung (14) im Rahmen der Ermittlung der von den Schutzkörpern (SK) eingenommenen Volumina (V) zusätzlich zum Lagefehlerfeld (F) auch eine Temperaturabhängigkeit und/oder elastische Effekte berücksichtigt.

7. Betriebsverfahren nach einem der obigen Ansprüche,
**dadurch gekennzeichnet,**
**dass** die Bearbeitungsmaschine als dreiachsige Maschine ausgebildet ist, mittels derer das Werkzeug (7) relativ zum Werkstück (10) zwar translatorisch positioniert, nicht aber rotatorisch orientiert werden kann, dass das Lagefehlerfeld (F) zusätzlich zu einem translatorischen Positionierungsfehler (δp) auch einen rotatorischen Orientierungsfehler (δo) definiert und dass die numerische Steuerung (14) im Rahmen der Ermittlung der von den Schutzkörpern (SK) eingenommenen Volumina (V) zusätzlich zum Positionierungsfehler (δp) auch den Orientierungsfehler (δp) berücksichtigt.

8. Betriebsverfahren nach einem der Ansprüche 1 bis 7,
**dadurch gekennzeichnet,**
**dass** die numerische Steuerung (14) das Lagefehlerfeld (F) auch bei der Ermittlung der Achssollwerte (li*) berücksichtigt.

9. Betriebsverfahren nach einem der Ansprüche 1 bis 7,
**dadurch gekennzeichnet,**
**dass** der numerischen Steuerung (14) von einem Benutzer (20) ein Steuerbefehl (C) vorgegeben wird und dass die numerische Steuerung (14) je nach vorgegebenem Steuerbefehl (C) das Lagefehlerfeld (F) bei der Ermittlung der Achssollwerte (li*) berücksichtigt oder nicht berücksichtigt.

10. Systemprogramm, das Maschinencode (17) umfasst, der von einer numerischen Steuerung (14) abarbeitbar ist, wobei die Abarbeitung des Maschinencodes (17) durch die numerische Steuerung (14) bewirkt, dass die numerische Steuerung (14) ein Betriebsverfahren nach einem der obigen Ansprüche ausführt.

11. Numerische Steuerung, wobei die numerische Steuereinrichtung mit einem Systemprogramm (15) nach Anspruch 10 programmiert ist.

12. Bearbeitungsmaschine, insbesondere Werkzeugmaschine,
- wobei die Bearbeitungsmaschine eine Mehrzahl von Maschinenelementen (1 bis 6, 8, 9) aufweist,
- wobei die Bearbeitungsmaschine eine Mehrzahl von lagegeregelten Achsen (11 bis 13) aufweist, mittels derer ein Teil der Maschinenelemente (1 bis 6, 8, 9) lagegeregelt verfahrbar sind,
- wobei die Bearbeitungsmaschine eine numerische Steuerung (14) aufweist, von der die lagegeregelten Achsen (11 bis 13) angesteuert werden,
**dadurch gekennzeichnet,**
**dass** die numerische Steuerung (14) mit einem Systemprogramm (15) nach Anspruch 10 programmiert ist.

## Claims

1. Operating method for a processing machine, especially a machine tool,
- wherein a parts program (18) which has a sequence of setpoint position values (p*) for a tool (7) of the processing machine relative to a workpiece (10) to be processed by means of the tool (7), is specified to a numerical control (14) of the processing machine
- wherein the numerical control (14), on the basis of the setpoint position values (p*), establishes a setpoint axis value (li*) in each case for a plurality of position-regulated axes (11 to 13) acting on machine elements (2 to 4) of the processing machine,
- wherein the machine elements (1 to 6, 8, 9), the workpiece (10) and the tool (7) are assigned virtual protection bodies (SK) within the numerical control (14),
- wherein the numerical control (14), before activating the position-regulated axes (11 to 13), establishes volumes (V) which would be occupied by the protection bodies (SK) on activation of the position-regulated axes (11 to 13) in accordance with the sequence of setpoint position values (p*) and checks whether - where necessary, with the exception of the processing to be performed by the tool (7) on the workpiece (10) - the protection bodies (SK) remain disjoint from one another here,
- wherein the numerical control (14) activates the position-regulated axes (11 to 13) in accordance with the sequence of setpoint position values (p*) when the protection bodies (SK) remain disjoint from one another and otherwise suppresses the activation of the position-regulated axes (11 to 13) and executes an error reaction,
**characterised in that** a position error field (F) is known to the numerical control, which for any given setpoint axis values (li*), specifies which actual position (p) the tool (7) assumes relative to the workpiece (10) when the position-regulated axes (11 to 13) are positioned at the respective setpoint axis values (li*),
- wherein the numerical control (14), at least for a part of the protection bodies (SK), in the establishment of the volumes (V) which would be occupied by the protection bodies (SK) on activation of the position-regulated axes (11 to 13) in accordance with the sequence of setpoint position values (p*), takes account of the position error field (F).

2. Operating method according to claim 1,
**characterised in that**
those protection bodies (SK), for which the numerical control (14) takes account of the position error field (F) in the establishment of the occupied volumes (V), at least comprise the tool (7) and a tool holder (6).

3. Operating method according to claim 1 or 2,
**characterised in that**
those protection bodies (SK), for which the numerical control (14) takes account of the position error field (F) in the establishment of the occupied volumes (V), at least comprise the workpiece (10) and a workpiece holder (9).

4. Operating method according to claim 2 or 3,
**characterised in that**
the numerical control (14) only takes account of the position error field (F) when establishing the occupied volumes (V) of these protection bodies (SK).

5. Operating method according to one of claims 1 to 4,
**characterised in that**
viewed from a base body (1, 8) of the processing machine, the machine elements (2 to 4) moved by means of the position-regulated axes (11 to 13), follow each other sequentially towards the tool (7) or the workpiece (10) and that in the establishment of the volumes (V) occupied by a protection body (SK) corresponding to a specific machine element (2 to 4) only the setpoint axis values (li*) of those position-regulated axes (11 to 13) are taken into account which act on machine elements (2 to 4) which, viewed from the base body (1, 8) to the tool (7) or towards the workpiece (10), are disposed between the base body (1, 8) and the specific machine element (2 to 4).

6. Operating method according to one of claims 1 to 4,
**characterised in that**
the numerical control (14) within the context of the establishment of the volumes (V) occupied by the protection bodies (SK), in addition to the position error field (F), also takes account of a temperature dependency and/or elastic effects.

7. Operating method according to one of the above claims,
**characterised in that**
the processing machine is embodied as a three-axis machine, by means of which the tool (7), although it can be translationally positioned relative to the workpiece (10), cannot however be rotationally oriented, that the position error field (F) in addition to a translational positioning error (δp) also defines a rotational orientation error (δo) and that the numerical control (14), within the context of establishing the volumes (V) occupied by the protection bodies (SK), also takes account of the orientation error (δo) in addition to the positioning error (δp).

8. Operating method according to one of claims 1 to 7,
**characterised in that**
the numerical control (14) also takes account of the position error field (F) when establishing the setpoint axis values (li*).

9. Operating method according to one of claims 1 to 7,
**characterised in that**
the numerical control (14) has a control command (C) specified to it by user (20) and that the numerical control (14), depending on the specified control command (C), takes account or does not take account of the position error field (F) when establishing the setpoint axis values (li*).

10. System program comprising machine code (17) which is able to be processed by a numerical control (14), wherein the processing of the machine code (17) by the numerical control (14) has the effect that the numerical control (14) executes an operating method according to one of the above claims.

11. Numerical control, wherein the numerical control is programmed with a system program (15) according to claim 10.

12. Processing machine, especially a machine tool,
- wherein the processing machine has a plurality of machine elements (1 to 6, 8, 9),
- wherein the processing machine has a plurality of position-regulated axes (11 to 13) by means of which a part of the machine elements (1 to 6, 8, 9) are able to be moved under position control,
- wherein the processing machine has a numerical control (14) by which the position-regulated axes (11 to 13) are activated,
**characterised in that**
the numerical control (14) is programmed with a system program (15) according to claim 10.

## Revendications

1. Procédé pour faire fonctionner une machine d'usinage, notamment une machine-outil,
- dans lequel il est donné, à une commande ( 14 ) numérique de la machine d'usinage, un programme-pièce ( 18 ) qui a une séquence de valeurs ( p* ) de consigne de position d'un outil ( 7 ) de la machine d'usinage par rapport à une pièce ( 10 ) à usiner au moyen de l'outil ( 7 ),
- dans lequel la commande ( 14 ) numérique détermine à l'aide des valeurs ( p* ) de consigne de position, pour une pluralité d'axes ( 11 à 13 ), réglés en position et agissant sur des éléments ( 2 à 4 ) de la machine d'usinage, de la machine d'usinage respectivement une valeur (1i*) de consigne d'axe,
- dans lequel il est affecté aux éléments ( 1 à 6, 8, 9 ) de la machine, à la pièce ( 10 ) et à l'outil ( 7 ), dans la commande ( 14 ) numérique, des corps ( SK ) de protection virtuels,
- dans lequel la commande ( 14 ) numérique détermine, avant la commande des axes ( 11 à 13 ) réglés en position, des volumes ( V ) qui seraient occupés, suivant la séquence de valeurs ( p* ) de consigne de position, par des corps ( SK ) de protection lors de la commande des axes ( 11 à 13 ) réglés en position et contrôle si - dans la mesure où cela est nécessaire à l'exception de l'usinage effectué par l'outil sur la pièce - les corps ( SK ) de protection restent disjoints les uns des autres,
- dans lequel la commande ( 14 ) numérique commande, suivant la séquence de valeur ( p* ) de consigne de position, les axes ( 11 à 13 ) réglés en position, si les corps ( SK ) de protection restent disjoints les uns des autres, et sinon, supprime la commande des axes ( 11 à 13 ) réglés en position et exécute une réaction d'erreur,
**caractérisé en ce que**
il est connu de la commande numérique un champ ( F ) d'erreur de position, qui indique pour n'importe quelle valeur ( 1i* ) de consigne d'axe, la position ( p ) réelle que prend l'outil ( 7 ) par rapport à la pièce ( 10 ), si les axes ( 11 à 13 ) réglés en position sont mis en position pour les valeurs ( li* ) de consigne d'axe respectives,
dans lequel
la commande ( 14 ) numérique prend en considération le champ ( F ) d'erreur de position, au moins pour une partie des corps ( SK ) de protection lors de la détermination des volumes ( V ), qui seraient occupés par les corps ( SK ) de protection lors de la commande des axes ( 11 à 13 ) réglés en position suivant la séquence des valeurs ( p* ) de consigne de position.

2. Procédé suivant la revendication 1,
**caractérisé**
**en ce que** les corps ( SK ) de protection, pour lesquels la commande ( 14 ) numérique prend, lors de la détermination des volumes ( V ) occupés, en considération le champ ( F ) d'erreur de position, comprend au moins l'outil ( 7 ) et un porte-outil ( 6 ).

3. Procédé suivant la revendication 1 ou 2,
**caractérisé**
**en ce que** les corps ( SK ) de protection, pour lesquels la commande ( 14 ) numérique prend, lors de la détermination des volumes ( V ) occupés, en considération le champ ( F ) d'erreur de position, comprend au moins la pièce ( 10 ) et un porte-outil ( 9 ).

4. Procédé suivant la revendication 2 ou 3,
**caractérisé**
**en ce que** la commande ( 14 ) numérique prend en compte le champs ( F ) d'erreur de position seulement lors de la détermination des volumes ( V ) occupés par ces corps ( SK ) de protection.

5. Procédé suivant l'une des revendications 1 à 4,
**caractérisé**
**en ce que**, considérés à partir d'un corps ( 1, 8 ) de base au repos de la machine d'usinage, les éléments ( 2 à 4 ) de machine, déplacés au moyen des axes ( 11 à 13 ) réglés en position, se succèdent séquentiellement en direction de l'outil ( 7 ) ou de la pièce ( 10 ) et en ce que, lors de la détermination du volume ( V ) occupé par un corps ( SK ) de protection correspondant à un élément ( 2 à 4 ) de machine déterminé, seules sont prises en considération les valeurs ( 1i* ) de consigne d'axe des axes ( 11 à 13 ) réglés en position, qui agissent sur des éléments ( 2 à 4 ) de machine qui, considérés du corps ( 1, 8 ) de base à l'outil ( 7 ) ou à la pièce ( 10 ), sont disposés entre le corps ( 1, 8 ) de base et l'élément ( 2 à 4 ) de machine déterminé.

6. Procédé suivant l'une des revendications 1 à 4,
**caractérisé**
**en ce que** la commande ( 14 ) numérique prend, dans le cadre de la détermination des volumes ( V ) occupés par les corps ( SK ) de protection, en considération, supplémentairement au champ ( F ) d'erreur de position, également une dépendance en fonction de la température et/ou des effets élastiques.

7. Procédé suivant l'une des revendications précédentes,
**caractérisé**
**en ce que** la machine d'usinage est constituée sous la forme d'une machine à trois axes, au moyen de laquelle l'outil ( 7 ) peut être mis en position, certes en translation par rapport à l'outil ( 10 ), mais ne peut pas être orienté en rotation, en ce que le champ ( F ) d'erreur de position, définit, supplémentairement à une erreur ( δp de mise en position en translation, également une erreur ( δo ) d'orientation en rotation et en ce que la commande ( 14 ) numérique prend, dans le cadre de la détermination des volumes ( V ) occupés par les corps ( SK ) de protection, supplémentairement à l'erreur ( δp ) de mise en position, également en considération l'erreur ( δp ) d'orientation.

8. Procédé suivant l'une des revendications 1 à 7,
**caractérisé**
**en ce que** la commande ( 14 ) numérique prend en considération le champ ( F ) d'erreur de position, également lors de la détermination des valeurs ( li* ) de consigne d'axe.

9. Procédé suivant l'une des revendications 1 à 7,
**caractérisé**
**en ce qu'**il est donné à la commande ( 14 ) numérique, par un utilisateur ( 20 ), une instruction ( C ) de commande et en ce que la commande ( 14 ) numérique prend, suivant l'instruction ( C ) de commande donnée, en considération le champ ( F ) d'erreur de position lors de la détermination des valeurs ( li* ) de consigne d'axe ou ne le prend pas en considération.

10. Programme de système qui comprend un code machine ( 17 ), qui peut se dérouler dans une commande ( 14 ) numérique, le déroulement du code machine ( 17 ) dans la commande ( 14 ) numérique faisant que la commande ( 14 ) numérique exécute un procédé suivant l'une des revendications précédentes.

11. Commande numérique, dans laquelle le dispositif de commande numérique est programmé par un programme ( 15 ) de système suivant la revendication 10.

12. Machine d'usinage, notamment machine-outil,
- dans laquelle la machine d'usinage a une pluralité d'éléments ( 1 à 6, 8, 9 ) de machine,
- dans laquelle la machine d'usinage a une pluralité d'axes ( 11 à 13 ) réglés en position, au moyen desquels une partie des éléments ( 1 à 6, 8, 9 ) de la machine peuvent être déplacés d'une manière réglée en position,
- dans laquelle la machine d'usinage a une commande ( 14 ) numérique, par laquelle les axes ( 11 à 13 ) réglés en position sont commandés,
**caractérisée**
**en ce que** la commande ( 14 ) numérique est programmée par un système de programme ( 15 ) suivant la revendication 10.
